# FASCICULE DE BREVET EUROPEEN

(11) **EP 1 588 889 B1**
(45) Date de publication et mention de la délivrance du brevet: **23.11.2016**
(21) Numéro de dépôt: 05008359.1
(22) Date de dépôt: 18.04.2005
(51) Int. Cl.: B60L 1/00, B60L 1/02, B60L 3/00, B60L 15/20, B60L 3/06, B60L 7/06, B60L 11/00, B60L 11/18

(54) **Chaîne de traction électrique pour véhicule à pile à combustible, comportant une résistance électrique de dissipation**
Elektrische Antriebsanlage für Brennstoffzellenfahrzeug mit einem elektrischen Widerstand zur Wärmeabfuhr
Electric traction assembly for fuel cell vehicle having an electric resistor for heat dissipation

(30) Priorité: 21.04.2004 FR 0404250
(43) Date de publication de la demande: 26.10.2005
(73) Titulaire: MICHELIN Recherche et Technique S.A., 1763 Granges-Paccot (CH); PAUL SCHERRER INSTITUT, 5232 Villigen PSI (CH)
(72) Inventeur: Varenne, Pierre, 1740 Neyruz (CH)
(74) Mandataire: Bauvir, Jacques

(56) Documents cités:
- EP-A- 0 633 157
- EP-A- 1 321 330
- WO-A-96/41393
- FR-A1- 2 792 259
- PATENT ABSTRACTS OF JAPAN vol. 2003, no. 12, 5 décembre 2003 (2003-12-05) & JP 2004 104925 A (SUMITOMO ELECTRIC IND LTD), 2 avril 2004 (2004-04-02)

## Description

### DOMAINE DE L'INVENTION

La présente invention se rapporte aux véhicules automobiles à pile à combustible. Plus particulièrement, elle se rapporte à la gestion de l'énergie électrique dans certaines phases transitoires.

### ETAT DE LA TECHNIQUE

Il est bien connu que l'une des possibilités pour fabriquer de l'énergie électrique à bord d'un véhicule est d'utiliser une pile à combustible. Malheureusement, certaines phases transitoires, notamment lorsque l'on souhaite freiner brutalement le véhicule, peuvent être assez problématiques car il est difficile d'annuler brutalement la puissance produite par les piles à combustibles. C'est plus particulièrement le cas lorsque la pile à combustible est alimentée en oxygène en comprimant l'air ambiant en temps réel au moment de l'utilisation, au lieu d'être alimentée directement en oxygène pur. Dans certaines configurations et notamment la dernière citée, on a observé que la réaction d'une pile à combustible aux changements de puissance est peu dynamique, beaucoup moins dynamique qu'un moteur à combustion interne.

Ceci est vrai aussi bien lorsque le besoin en puissance augmente que lorsque le besoin en puissance diminue. Dans certains cas, par exemple lorsque le conducteur du véhicule souhaite brutalement ralentir alors que juste auparavant il commandait une pleine accélération, la puissance électrique consommée par un véhicule à pile à combustible peut diminuer très brutalement, beaucoup plus rapidement que la puissance produite par la pile. Or, il se peut que le stockage d'énergie électrique soit impossible, par exemple parce qu'il n'y a pas d'accumulateur électrique ou parce que, si le véhicule est pourvu d'une batterie d'accumulateurs, ceux-ci sont déjà à leur charge maximale.

Par ailleurs, il est bien connu que les machines électriques sont réversibles. Ainsi, dans un véhicule automobile à traction électrique, la machine électrique couplée mécaniquement aux roues motrices peut être utilisée en moteur électrique pour assurer la propulsion du véhicule, en fournissant de l'énergie électrique à la machine électrique. Celle-ci peut être utilisée aussi en génératrice électrique pendant les phases de freinage du véhicule et dans ce cas elle transforme l'énergie mécanique de freinage en énergie électrique que le véhicule doit absorber, éventuellement par dissipation thermique. Ce mode de fonctionnement est souvent appelé « freinage électrique ».

Si un objectif de bon sens est bien entendu de récupérer autant que possible l'énergie lors des freinages du véhicule, on sait que cette récupération se heurte aux caractéristiques des dispositifs de stockage de l'énergie électrique connus actuellement. Si l'on fait fonctionner la machine électrique en génératrice au couple maximal dont elle est capable, on va renvoyer sur la ligne électrique un courant très intense. Or, la plupart des batteries ne sont pas capables d'absorber des courants de charge importants. Seuls les condensateurs peuvent absorber des courants de charge aussi importants que les courants de décharge, mais leur capacité de stockage reste faible. La technologie des super condensateurs peut s'avérer intéressante pour les applications automobiles en offrant une capacité de stockage par unité de masse (c'est à dire une densité d'énergie) plus importante que les condensateurs et permettant des courants de charge plus importants que les batteries. Malgré tout, installer des accumulateurs entraîne toujours une augmentation de poids proportionnelle à leur capacité de stockage, à même technologie, et de plus, quelle que soit la technologie utilisée pour stocker l'énergie électrique, on se heurtera toujours à l'impossibilité de poursuivre l'accumulation d'énergie électrique lorsque l'état de charge des dispositifs utilisés est à son maximum.

Or, il est intéressant de pouvoir, malgré tout, continuer à utiliser la ou les machines électriques en génératrice pour assurer la décélération ou le freinage du véhicule ne fût-ce que pour alléger la sollicitation des freins mécaniques du véhicule. Il est en effet avantageux de n'utiliser ceux-ci que dans les manoeuvres d'urgence ou pour les freinages les plus importants afin d'éviter un échauffement important en utilisation courante. De plus, le freinage électrique apporte un confort de conduite comparable au ressenti amené dans un véhicule conventionnel par le frein moteur, ce qui est de nature à faciliter la prise en main de tels véhicules par des conducteurs dont les réflexes ont été forgés par la conduite de ces véhicules conventionnels.

Pour toutes les raisons évoquées ci-dessus, il est utile de pouvoir maintenir un freinage électrique alors même que la pile à combustible continue momentanément à produire de l'énergie électrique.

La demande de brevet WO96/41393 décrit une pile à combustible pour véhicule dans laquelle une résistance électrique est plongée dans le liquide du circuit de refroidissement de la pile à combustible pour pouvoir réchauffer très vite la pile à combustible. La résistance électrique peut le cas échéant être alimentée en courant électrique en produisant de l'énergie électrique lors du freinage du véhicule pour accélérer la mise en température de la pile ou pour la maintenir en température. Le brevet US 6,448,535 décrit aussi décrit une pile à combustible pour véhicule dans laquelle une résistance électrique est plongée dans le liquide d'un circuit primaire de refroidissement de la pile à combustible pour pouvoir éviter que le liquide gèle car celui-ci est, selon ce brevet, nécessairement de l'eau dé-ionisée. Ce circuit primaire de refroidissement est relié thermiquement à un circuit secondaire de refroidissement par liquide avec lequel il échange ses calories. Le circuit secondaire de refroidissement est seul pourvu d'un radiateur d'échange avec l'atmosphère et est aussi utilisé pour refroidir un moteur électrique.

Quant au brevet US 6,448,535, et son équivalent FR 2 792 259 A1, il propose d'utiliser un moteur électrique de traction refroidi par liquide, le liquide échangeant dans ce cas ses calories dans le circuit de refroidissement par liquide caloporteur implanté sur le véhicule. On pourrait alors aboutir à un échauffement excessif si l'on dissipe en plus dans le circuit de refroidissement des calories au moyen de la résistance électrique plongée dans le circuit de refroidissement.

On connait également la demande de brevet EP 0 633 157 qui décrit un véhicule électrique alimenté par une pile à combustible dans lequel la pile à combustible est alimentée en oxygène par compression de l'air ambiant.

Enfin la demande de brevet européen EP 1 321 330 décrit la gestion de la puissance électrique, alimentant un véhicule, entre divers composants du véhicule parmi une pile à combustible, une chaine de traction pour véhicule, une résistance électrique de dissipation et une batterie secondaire selon les modes d'usage du véhicule, freineur ou moteur, et des points de fonctionnement de la pile à combustible Les situations de réduction de la puissance électrique requise par le véhicule engendre l'arrêt de la pile à combustible qui est source d'instabilité et de dysfonctionnement de celle-ci réduisant d'autant l'efficacité énergétique finale d'un tel véhicule.

Se pose alors le problème d'une gestion efficace de certaines phases de freinage du véhicule, notamment en cas de freinage appuyé et brutal.

### BREVE DESCRIPTION DE L'INVENTION

L'objectif de l'invention est d'apporter une solution pour la gestion des puissances qui soit bien adaptée pour faire face en toutes circonstances aux phases de freinage brutal d'un véhicule à pile à combustible.

L'invention propose une chaîne de traction électrique pour véhicule selon la revendication 1

Ainsi, l'invention propose de dissiper dans une résistance électrique l'énergie électrique excédentaire produite à la fois par une ou des machines électriques de traction pilotées de façon à produire un freinage électrique et par la pile à combustible pendant un certain temps dû à son inertie de fonctionnement.

De préférence, pour assurer une dissipation très efficace, on utilise une résistance électrique plongée dans un liquide d'un circuit de refroidissement à liquide caloporteur. En outre, ayant observé que, en cas de freinage électrique, la pile à combustible ne sera très rapidement plus sollicitée, l'invention prévoit de préférence deux circuits de refroidissement séparés : un premier circuit de refroidissement à liquide de refroidissement assure le refroidissement de la pile à combustible, et un deuxième circuit de refroidissement à liquide de refroidissement, indépendant du premier cité, concerne la ou les machines électriques reliées aux roues motrices ainsi que les modules électroniques de commande, notamment ceux pilotant ces machines électriques, et la résistance électrique de dissipation est immergée dans le premier circuit de refroidissement.

Puisque la pile à combustible ne sera plus sollicitée pendant les phases de freinage électrique, la puissance de refroidissement du circuit de refroidissement de cette partie du véhicule ne sera très rapidement plus sollicitée, au delà des effets de l'inertie de la pile à combustible. On comprend donc que la meilleure implantation pour la résistance électrique de dissipation de l'énergie électrique de freinage est dans celui des circuits de refroidissement qui concerne la pile à combustible. En effet, côté machine électrique reliée aux roues motrices du véhicule, que l'on fonctionne en traction ou en freinage, cette machine électrique est susceptible d'être sollicitée au maximum de ses capacités, ainsi que tous les organes de commande de celle-ci. Or le rendement est sensiblement le même quel que soit le sens de la transformation d'énergie (énergie électrique en énergie cinétique, ou inversement). Les pertes responsables d'un dégagement de calories sont donc toujours sensiblement les mêmes.

Utiliser le circuit de refroidissement de la ou des machines électriques couplées mécaniquement aux roues pour en plus refroidir la résistance électrique de dissipation reviendrait à solliciter d'autant plus ce circuit de refroidissement et à devoir le dimensionner en conséquence. On se débarrasse de cette contrainte en installant la résistance électrique de dissipation dans le circuit de refroidissement de la pile à combustible car, pendant les phases de freinage électrique, ce circuit n'est sollicité que pendant un temps réduit, fonction de l'inertie de la pile à combustible. La puissance de refroidissement de ce circuit de refroidissement est donc disponible pour évacuer les calories produites par la résistance électrique de dissipation.

Il est judicieux de prévoir deux circuits de refroidissement séparés pour une autre raison : les niveaux de température des circuits peuvent être différents. On aura intérêt à travailler à environ 90°C par exemple pour le circuit de refroidissement d'un moteur thermique ou 70°C à 80°C par exemple pour le circuit de refroidissement d'une pile à combustible et à température de 50°C par exemple, voire moins si possible, sur le circuit de refroidissement des machines électriques et dispositifs de commande associés.

### BREVE DESCRIPTION DES FIGURES

La suite de la description permet de bien faire comprendre tous les aspects de l'invention en s'appuyant sur la figure unique qui illustre de façon non limitative les circuits de refroidissement installés sur un véhicule à pile à combustible.

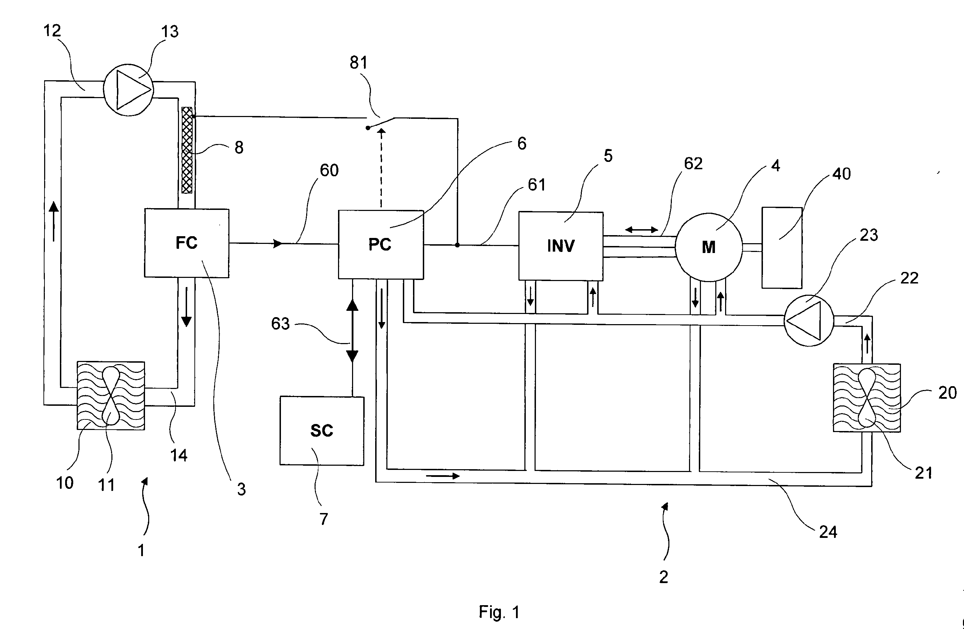

A la figure 1, on voit une pile à combustible 3 reliée à une unité de gestion de l'énergie électrique 6 par une ligne électrique 60. De préférence, la pile à combustible est une pile à membrane polymère (PEFC) ou une pile alcaline (AFC). On voit également une machine électrique 4 destinée à être utilisée en moteur de traction ou en génératrice pendant les phases de freinage électrique. La machine électrique 4 est reliée à au moins une roue motrice 40. Le module électronique de pilotage de la machine électrique est un onduleur 5. Une ligne électrique 61 relie l'unité de gestion de l'énergie électrique 6 à l'onduleur 5, et une ligne électrique 62 relie l'onduleur 5 à la machine électrique 4. Bien entendu, d'autres charges électriques (non représentées sur la figure) sont connectées à la ligne 61, comme par exemple le climatiseur du véhicule, de nombreuses fonctions périphériques comme l'éclairage du véhicule, ou d'autres fonctions principales dont le contrôle, jadis essentiellement par voie mécanique, bascule vers une commande électrique comme la direction, les freins ou même la suspension des véhicules.

La chaîne de traction selon l'invention comporte de préférence un dispositif de stockage de l'énergie électrique, raccordé à la ligne électrique 61 via l'unité de gestion 6 de l'énergie électrique, et raccordé à l'unité de gestion de l'énergie électrique 6 au moyen d'une ligne électrique 63. Ce dispositif de stockage de l'énergie électrique est avantageusement un banc de super condensateurs 7.

Un premier circuit de refroidissement 1 dans lequel circule une première charge de liquide de refroidissement assure le refroidissement de la pile à combustible 3. Le premier circuit de refroidissement 1 comporte un premier radiateur 10 de dissipation des calories vers l'atmosphère ambiante, une pompe hydraulique 13, une canalisation 12 assurant la distribution du liquide de refroidissement depuis le premier radiateur 10 vers la pile à combustible 3. Le liquide de refroidissement peut être un liquide dé-ionisé pour être non conducteur de l'électricité, par exemple de l'eau ou un mélange d'eau et de glycol dé-ionisé, dans la mesure où il circule au sein même de la pile à combustible (selon l'importance de cet aspect électrique, c'est-à-dire s'il est important d'augmenter l'impédance électrique de la branche constituée par ce circuit de refroidissement). Le sens de circulation du liquide caloporteur est indiqué sur le dessin. On voit également une canalisation 14 ramenant le liquide de refroidissement après son échauffement depuis la pile 3 vers le premier radiateur 10 assurant un échange thermique avec l'air ambiant. Comme bien connu, le refroidissement du radiateur 10 est rendu plus efficace par l'action d'un ventilateur 11 assurant une circulation forcée de l'air ambiant au travers du radiateur 10.

On voit également un second circuit de refroidissement 2 indépendant du premier circuit de refroidissement 1 et dans lequel circule un liquide de refroidissement. Le second circuit de refroidissement 2 utilise une autre charge de liquide caloporteur indépendante de la première charge utilisée dans le premier circuit de refroidissement. On peut utiliser éventuellement dans les deux circuit un liquide caloporteur de même nature mais en tout cas les charges sont séparées et donc les liquides ne se mélangent pas. Le second circuit de refroidissement est en outre thermiquement indépendant du premier circuit de refroidissement 1 : il comporte un second radiateur 20 de dissipation des calories vers l'atmosphère ambiante, différent du premier radiateur 10, une pompe hydraulique 23 et un réseau de tuyaux assurant la distribution du liquide de refroidissement vers les différents organes qu'il faut refroidir. Le sens de circulation du liquide caloporteur est indiqué sur le dessin. Le second circuit de refroidissement 2 établit une circulation de liquide de refroidissement dans plusieurs composants électriques. Le liquide de refroidissement est par exemple de l'eau ordinaire ou un mélange d'eau et de glycol.

La chaîne de traction, ou même plus généralement le véhicule propulsé par la chaîne de traction selon l'invention, pourrait comporter éventuellement différents modules électroniques de gestion autre que l'onduleur 5 déjà cité, le second circuit de refroidissement 2 établissant une circulation de liquide de refroidissement dans plusieurs modules électroniques de gestion. De préférence, tous les modules électroniques de gestion refroidis au moyen d'un liquide de refroidissement sont reliés au second circuit de refroidissement 2.

De préférence, tous les composants électriques refroidis au moyen d'un liquide de refroidissement sont reliés à ce second circuit de refroidissement 2. De façon avantageuse, la machine électrique 4 mécaniquement reliée à la ou aux roues motrices 40 du véhicule est reliée à ce second circuit de refroidissement 2.

Ainsi, on voit un réseau de tuyaux 22 assurant la distribution du liquide de refroidissement à basse température à la machine électrique 4, à l'onduleur 5 et à l'unité de gestion de l'énergie électrique 6. On voit également un réseau de tuyaux 24 ramenant le liquide de refroidissement après son échauffement depuis l'unité de gestion de l'énergie électrique 6, depuis l'onduleur 5 et depuis la machine électrique 4 vers le second radiateur 20. Comme bien connu en soi, l'efficacité de l'échange thermique du second radiateur 20 est renforcée par l'action d'un ventilateur 21 assurant une circulation forcée de l'air ambiant au travers du second radiateur 20.

Avantageusement, tous les composants électriques refroidis au moyen d'un liquide de refroidissement sont reliés au second circuit de refroidissement 2.

Une résistance électrique de dissipation 8 est installée dans le premier circuit de refroidissement 1. Cette résistance de dissipation 8 est reliée à la ligne électrique 61 via un interrupteur électronique 81, lui-même commandé par l'unité de gestion de l'énergie électrique 6.

L'unité de gestion de l'énergie électrique 6 reçoit des informations provenant du conducteur du véhicule et des informations décrivant l'état de fonctionnement du véhicule, comme la vitesse de déplacement. En phase de traction électrique, l'unité de gestion de l'énergie électrique 6 connecte directement la pile à combustible 3 à l'onduleur 5 et l'onduleur 5 transmet l'énergie électrique sous la forme appropriée à la machine électrique 4 afin que celle-ci fonctionne en moteur. Selon les circonstances, l'unité de gestion de l'énergie électrique 6 peut également connecter le banc de super condensateurs 7 à la ligne électrique 61 pendant les phases de fonctionnement en moteur afin de puiser l'énergie électrique en réserve dans le banc de super condensateurs 7 pour l'ajouter à l'énergie provenant de la pile à combustible 3.

Chacun des deux circuits de refroidissement est de préférence régulé en température, par exemple au moyen d'un thermostat non représenté. Puisque les circuits sont indépendants, la température de régulation de chacun de ceux-ci peut être différente. Par exemple, la température de régulation idéale pour une pile à combustible est un peu plus élevée que la température de régulation idéale du circuit assurant le refroidissement de la machine électrique 4 et des composants électroniques qui lui sont associés. A titre d'illustration, la température de régulation est de l'ordre de 60°C à 90°C pour une pile à membrane polymère (PEFC) et elle est de l'ordre de 45°C à 65°C pour le circuit assurant le refroidissement de la machine électrique 4 et des composants électroniques qui lui sont associés.

Lorsque le mode de fonctionnement du véhicule contrôlé par l'unité de gestion de l'énergie électrique 6 passe en freinage électrique, l'onduleur 5 pilote la machine électrique 4 en génératrice de façon à ce qu'elle renvoie de l'énergie électrique sur la ligne 61. Si l'énergie électrique ainsi renvoyée sur la ligne 61 est supérieure aux besoins du véhicule, c'est à dire à l'énergie absorbée par les autres charges électriques connectées à la ligne 61 telles que celles évoquées ci-dessus, alors le pilotage de la pile à combustible 3 arrête le fonctionnement de celle-ci. Comme l'inertie d'une pile à combustible est très faible, la pile à combustible 3 cesse rapidement de communiquer des calories au liquide de refroidissement circulant dans le premier circuit de refroidissement 1. Pendant le fonctionnement en freinage électrique, toutes les charges électriques connectées à la ligne 61 vont absorber une partie de l'énergie électrique disponible. Egalement, l'unité de gestion de l'énergie électrique 6 envoie l'énergie électrique en priorité vers le banc de super condensateurs 7, dans la limite où ceux-ci n'ont pas atteint leur charge maximale.

Cependant, si toutes ces charges ne permettent pas d'absorber l'énergie électrique disponible sur la ligne, ce que l'unité de gestion de l'énergie électrique 6 peut détecter par exemple par une élévation de la tension sur la ligne 61, alors l'unité de gestion de l'énergie électrique 6 ferme l'interrupteur 81 pour ajouter la résistance de dissipation 8 comme charge électrique. Cette résistance est capable d'absorber le courant maximal injecté sur la ligne 61 par la ou les machines électriques 4. La résistance électrique 8 de dissipation s'échauffe et les calories sont évacuées au fur et à mesure par le liquide de refroidissement qui les emmène vers le premier radiateur 10. Bien entendu, l'installation est dimensionnée de façon à ce que, même lorsque la résistance électrique de dissipation 8 est parcourue par le courant maximal possible, l'échauffement du liquide de refroidissement à l'intérieur du circuit de refroidissement 1 reste compatible avec le bon fonctionnement de la pile à combustible 3.

L'efficacité de l'évacuation des calories produites par la résistance de dissipation 8 est telle que, par comparaison avec une résistance de dissipation qui serait refroidie à l'air, on peut utiliser des résistances 8 bien plus compactes. De plus, il n'y a aucune dégradation du coefficient de pénétration dans l'air du véhicule. En effet, on utilise la capacité du radiateur 10 à évacuer des calories à un moment où il n'aurait pas été utilisé en raison de l'arrêt du fonctionnement de la pile à combustible. Ainsi, on a réussi à agencer les circuits de refroidissement de manière à utiliser au mieux leurs capacités et en profitant du caractère mutuellement exclusif du fonctionnement de la pile à combustible à sa charge maximale et de l'utilisation de la résistance de dissipation 8 à sa charge maximale.

## Revendications

1. Chaîne de traction électrique pour véhicule, ladite chaîne de traction comprenant :
- une ligne électrique (61) à laquelle sont connectées des charges auxiliaires ;
- une pile à combustible (3) raccordée à la ligne électrique (61) ;
- une unité de gestion (6) de l'énergie électrique comprenant un module de pilotage de la pile à combustible ;
- un organe de commande à la disposition d'un conducteur du véhicule pour commander une décélération du véhicule, l'organe de commande étant relié à l'unité de gestion ;
- au moins une machine électrique (4) reliée à au moins une roue motrice (40), connectée à la ligne électrique (61) au moyen d'un module électronique de pilotage de la machine électrique;
- une résistance électrique de dissipation (8) ;
**caractérisée en ce que** ladite pile à combustible (3) comporte un premier circuit de refroidissement (1), assurant le refroidissement de ladite pile à combustible (3) au moyen d'une première charge de fluide caloporteur, ledit premier circuit de refroidissement (1) comportant un premier radiateur (10) de dissipation des calories vers l'extérieur, **et en ce que** ladite chaîne de traction électrique pour véhicule comporte des moyens pour, en cas de demande de décélération, et lorsque l'unité de gestion (6) détecte que la puissance absorbée par les charges auxiliaires est inférieure à la puissance envoyée sur la ligne électrique (61), ordonner au module de pilotage de la pile à combustible d'arrêter le processus de production d'énergie électrique tout en connectant ladite résistance (8) de dissipation à la dite ligne électrique (61).

2. Chaîne de traction selon la revendication 1, **caractérisée en ce que** la machine électrique (4) étant reliée à un second circuit de refroidissement (2) comportant un second radiateur (20) de dissipation des calories vers l'atmosphère ambiante, le second circuit de refroidissement (2) utilisant une autre charge de liquide caloporteur indépendante de la charge utilisée dans le premier circuit de refroidissement, le second circuit de refroidissement étant en outre thermiquement indépendant du premier circuit de refroidissement (1)

3. Chaîne de traction selon la revendication 1, **caractérisée en ce que** la résistance électrique de dissipation (8) est immergée dans ledit premier circuit de refroidissement (1).

4. Chaîne de traction selon la revendication 1 ou 2, dans laquelle la pile à combustible est alimentée en oxygène par compression de l'air ambiant.

5. Chaîne de traction selon la revendication 1 ou 2, dans laquelle la pile à combustible est alimentée en oxygène pur.

6. Chaîne de traction selon l'une des revendications 1 à 4, dans laquelle la pile à combustible est choisie dans le groupe constitué par les piles à membrane polymère et les piles alcalines.

7. Chaîne de traction selon l'une des revendications 1 à 5, dans laquelle le module électronique de pilotage de la machine électrique est un onduleur (5).

8. Chaîne de traction selon l'une des revendications 1 à 5, comportant différents modules électroniques de gestion, dans laquelle le second circuit de refroidissement (2) établit une circulation de liquide de refroidissement dans plusieurs modules électroniques de gestion.

9. Chaîne de traction selon la revendication 1, dans laquelle un dispositif de stockage de l'énergie électrique est raccordé à la ligne électrique (61) via l'unité de gestion (6) de l'énergie électrique.

## Patentansprüche

1. Elektrisches Antriebssystem für ein Fahrzeug, wobei das Antriebssystem Folgendes umfasst:
- eine elektrische Leitung (61) mit der Nebenlasten verbunden sind;
- eine Brennstoffzelle (3), die an der elektrischen Leitung (61) angeschlossen ist;
- eine Verwaltungseinheit (6) der elektrischen Energie, die ein Steuermodul der Brennstoffzelle umfasst;
- ein Betätigungsglied, das einem Fahrzeugführer zur Verfügung steht, um eine Verzögerung des Fahrzeugs anzusteuern, wobei das Betätigungsglied mit der Verwaltungseinheit verbunden ist;
- mindestens eine mit mindestens einem Antriebsrad (40) verbundene elektrische Maschine (4), die mit der elektrischen Leitung (61) mittels eines elektronischen Steuermoduls der elektrischen Maschine verbunden ist;
- einen elektrischen Dissipationswiderstand (8); **dadurch gekennzeichnet, dass** die Brennstoffzelle (3) einen ersten Kühlkreis (1) hat, der die Kühlung der Brennstoffzelle (3) mittels einer ersten Ladung einer Wärmeträgerflüssigkeit gewährleistet, wobei der erste Kühlkreis (1) einen ersten Radiator (10) zur Abführung der Wärmeenergie nach außen aufweist, und dass das elektrische Antriebssystem für das Fahrzeug Mittel zum Anweisen eines Steuermoduls der Brennstoffzelle, bei einer Verzögerungsanforderung, und wenn die Verwaltungseinheit (6) detektiert, dass die durch die Nebenlasten aufgenommene Leistung unter der über die elektrische Leitung (61) gelieferten Leistung liegt, den Vorgang der Erzeugung von elektrischer Energie unter Verbindung des Dissipationswiderstands (8) mit der elektrischen Leitung (61) anzuhalten, aufweist.

2. Antriebssystem nach Anspruch 1, **dadurch gekennzeichnet, dass** die elektrische Maschine (4) mit einem zweiten Kühlkreis (2) verbunden ist, der einen zweiten Radiator (20) zur Abfuhr der Wärmeenergie in die Umgebungsatmosphäre aufweist, wobei der zweite Kühlkreis (2) eine andere Ladung von Wärmeträgerflüssigkeit unabhängig von der im ersten Kühlkreis verwendeten Ladung verwendet, wobei der zweite Kühlkreis außerdem thermisch unabhängig vom ersten Kühlkreis (1) ist.

3. Antriebssystem nach Anspruch 1, **dadurch gekennzeichnet, dass** der elektrische Dissipationswiderstand (8) in den ersten Kühlkreis (1) eingetaucht ist.

4. Antriebssystem nach Anspruch 1 oder 2, bei dem die Brennstoffzelle durch Verdichtung der Umgebungsluft mit Sauerstoff versorgt wird.

5. Antriebssystem nach Anspruch 1 oder 2, bei dem die Brennstoffzelle mit reinem Sauerstoff versorgt wird.

6. Antriebssystem nach einem der Ansprüche 1 bis 4, bei dem die Brennstoffzelle aus der Gruppe ausgewählt wird, die aus den Polymermembran-Brennstoffzellen und den alkalischen Brennstoffzellen besteht.

7. Antriebssystem nach einem der Ansprüche 1 bis 5, wobei das elektronische Steuermodul der elektrischen Maschine ein Wechselrichter (5) ist.

8. Antriebssystem nach einem der Ansprüche 1 bis 5, das verschiedene elektronische Verwaltungsmodule umfasst, wobei der zweite Kühlkreis (2) einen Kühlflüssigkeitsumlauf in mehreren elektronischen Verwaltungsmodulen aufbaut.

9. Antriebssystem nach Anspruch 1, bei dem eine Speichervorrichtung der elektrischen Energie an die elektrische Leitung (61) über die Verwaltungseinheit (6) der elektrischen Energie angeschlossen ist.

## Claims

1. Electrical power train for a vehicle, the said power train comprising:
- an electrical line (61) to which the auxiliary loads are connected;
- a fuel cell (3) connected to the electrical line (61),
- an electrical energy management unit (6) comprising a fuel cell control module;
- a control device available to the driver of the vehicle in order to control deceleration of the vehicle, the control device being connected to the management unit;
- at least one electrical machine (4) connected to at least one driving wheel (40), connected to the electrical line (61) by means of an electronic control module for the electrical machine;
- an electrical dissipation element (8);
**characterized in that** said fuel cell comprises a first cooling circuit (1), providing the cooling of the fuel cell (3) by means of a first heat-transfer liquid charge, the first cooling circuit (1) comprising a first radiator (10) for dissipating heat to the ambient atmosphere, and **in that** said electrical power train for a vehicle comprises means for, in the case of a demand for deceleration, and when the management unit (60) detects that the power absorbed by the auxiliary loads is less than the power sent over the electrical line (61), ordering the fuel cell control module to stop the process of producing electrical energy whilst connecting the said dissipation element (8) to the said electrical line (61).

2. Power train according to Claim 1, **characterised in that**, the electrical machine (4) being connected to a second cooling circuit (2) comprising a second radiator (20) for dissipating heat to the ambient atmosphere, the second cooling circuit (2) using another heat-transfer liquid charge independent of the charge used in a first cooling circuit, the second cooling circuit also being thermally independent of the first cooling circuit (1).

3. Power train according to Claim 1, **characterised in that** the electrical dissipation element (8) is immersed in the said first cooling circuit (1).

4. Power train according to Claim 1 or 2, in which the fuel cell is supplied with oxygen by compression of the ambient air.

5. Power train according to Claim 1 or 2, in which the fuel cell is supplied with pure oxygen.

6. Power train according to one of Claims 1 to 4, in which the fuel cell is chosen from the group consisting of polymer membrane cells and alkaline cells.

7. Power train according to one of Claims 1 to 5, in which the electronic control module for the electrical machine is an inverter (5).

8. Power train according to one of Claims 1 to 5, comprising various electronic management modules, in which the second cooling circuit (2) establishes a circulation of cooling liquid in several electronic management modules.

9. Power train according to Claim 1, in which an electrical energy storage device is connected to the electrical line (61) via the electrical energy management unit (6).
